# EUROPÄISCHE PATENTANMELDUNG

(11) **EP 1 284 535 A1**
(43) Veröffentlichungstag der Anmeldung: **19.02.2003**
(21) Anmeldenummer: 02012656.1
(22) Anmeldetag: 07.06.2002
(51) Int. Cl.: H02G 3/04

(54) **Installationskanal**

(30) Priorität: 18.08.2001 DE 20113696 U
(71) Anmelder: Tehalit GmbH & Co. KG, D-67716 Heltersberg (DE)
(72) Erfinder: Ostertag, Christian, 67240 Bischwiller (FR); Schnurr, Richard, 66957 Vinningen (DE)
(74) Vertreter: Patentanwälte Möll und Bitterich

(57) **Zusammenfassung**

Ein Installationskanal, bestehend aus einem Kanalunterteil (10) und drei Deckeln (30, 40, 50), kann mit Hilfe einer Trennwand (20) in zwei Kammern unterteilt werden. Die eine Kammer nimmt beispielsweise das vom Elektroversorgungsunternehmen kommende Hausanschlusskabel (1) auf. Diese Kammer ist durch den Deckel (40) verschlossen, der mit der Trennwand (20) einstückig über ein Scharnier (42) verbunden ist.

## Beschreibung

Die Erfindung betrifft Installationskanäle gemäß dem Oberbegriff des Anspruchs 1.

Kabelkanäle sind seit über einhundert Jahren in den unterschiedlichsten Ausführungen bekannt.

Man unterscheidet Verdrahtungskanäle für die Verlegung von Drähten insbesondere in Schaltschränken, Leitungsführungskanäle für die Verlegung von Leitungen, Geräteeinbaukanäle für den Einbau von Elektroinstallationsgeräten wie Schaltern und Steckdosen und Installationskanäle für die Gebäudeinstallation.

Ein Installationskanal der hier relevanten Art ist beispielsweise bekannt aus der EP 0 382 597 A. Dieser besteht aus einem etwa U-förmigen Kanalunterteil, welches einen Boden, zwei Seitenwände, Deckelhalteprofile an den Seitenwänden und Halteleisten an der Innenseite des Bodens besitzt und aus einem Deckel, der auf die Deckelhalteprofile an den Seitenwänden aufgerastet wird und die offene Frontseite des Kanalunterteils verschließt. Ferner ist vorgesehen eine Trennwand, die auf eine der Halteleisten aufgeklemmt wird und den Innenraum des Kanalunterteils in zwei Kammern unterteilt. Die Trennwand trägt an ihrer Oberkante zwei identische Deckelhalteprofile, identisch mit den Deckelhalteprofilen an den Seitenwänden und auch auf derselben Höhe positioniert. Auf diese Deckelhalteprofile können zwei zusätzliche, schmälere Deckel aufgerastet werden, von denen jeder eine der Kammern verschließt.

In der Praxis wird in der durch die Trennwand abgeteilten schmäleren Kammer das vom Elektroversorgungsunternehmen kommende Hausanschlusskabel verlegt, welches zu einer auf dem Installationskanal montierten Anschlussbox mit Verbrauchszähler, Hauptsicherung und Einzelsicherungen geführt ist. Die von den Einzelsicherungen abgehenden Kabel und Drähte werden in der zweiten Kammer geführt.

Nachteilig an der bekannten Konstruktion ist die Vielzahl der benötigten Einzelteile. Alle drei Deckel und die Trennwand müssen produziert, gelagert, katalogisiert, bestellt, transportiert und montiert werden. Die Erfahrung zeigt, dass der Installateur oft vergisst, alle benötigten Teile zu bestellen oder auf die Baustelle mitzunehmen, so dass er seine Arbeit nicht vollenden kann.

Ein weiteres Problem bereiten die Deckelhalteprofile. Es versteht sich, dass die das Versorgungskabel aufnehmende Kammer verschlossen bleiben sollte, wenn der Installateur an der Hausinstallation arbeitet. Macht der Kanalhersteller daher die Deckelhalteprofile so eng, dass der entsprechende Deckel fest sitzt, so lassen sich auch die anderen Deckel nur schwer oder gar nicht lösen, weil ja alle Deckelhalteprofile identisch sind. Auf jeden Fall muss der Installateur ein Spezialwerkzeug verwenden. Gestaltet der Kanalhersteller die Deckelhalteprofile so, dass die Deckel sich leicht lösen lassen, so besteht die Gefahr, dass der die Kammer mit dem Versorgungskabel verschließende Deckel sich ebenso leicht löst. Dies ist unbefriedigend.

Der vorliegenden Erfindung liegt daher die Aufgabe zugrunde, einen Installationskanal anzugeben, der dem Elektroversorgungsunternehmen und dem Installateur dieselben Vorteile bietet wie der bekannte Installationskanal, der jedoch weniger Einzelteile aufweist und die Montage erleichtert.

Diese Aufgabe wird gelöst durch einen Installationskanal mit den Merkmalen des Anspruchs 1.

Der wesentliche Vorteil der vorliegenden Erfindung besteht darin, dass die Trennung des Kanals in zwei Kammern und der sichere Verschluss der das Versorgungskabel aufnehmenden Kammer durch ein einziges Teil realisiert wird. Dadurch reduziert sich die Zahl der Einzelteile. Der die Versorgungskammer verschließende Deckel kann sich nicht von der Trennwand lösen. Gleichzeitig bleibt die Flexibilität einer lösbaren Trennwand erhalten und die das Versorgungskabel aufnehmende Kammer kann je nach den örtlichen Gegebenheiten am rechten oder linken Seitenrand des Installationskanals etabliert werden.

Vorteilhafterweise ist der zweite Deckel direkt neben dem Deckelhalteprofil der Trennwand positioniert. Dadurch ergibt sich im fertig montierten Zustand eine optimale Optik.

Vorteilhafterweise sind Trennwand und zweiter Deckel koextrudiert. Dadurch wird die Herstellung vereinfacht.

Vorzugsweise beinhaltet das erfindungsgemäße Teil zur Optimierung der Trennfunktion einerseits und der Verschlussfunktion andererseits eine flexible Stelle, die je nach Bedarf durch eine Materialverengung, z. B. in Form eines Filmscharniers, oder durch einen koextrudierten flexiblen Materialstrang gebildet wird. Die entsprechenden Fertigungstechnologien sind bekannt und bewährt.

Zwecks einer einheitlichen Optik können die Deckelhalteprofile auf einer solchen Höhe positioniert sein, dass die abnehmbaren Deckel mit dem fixen Deckel fluchten.

Anhand der Zeichnung soll die Erfindung in Form eines Ausführungsbeispiels näher erläutert werden. Es zeigen jeweils rein schematisch
- Fig.1: eine Draufsicht auf einen Ausschnitt aus einem an einer Wand montierten Installationskanal und
- Fig.2: einen Querschnitt durch den Installationskanal der Fig. 1.

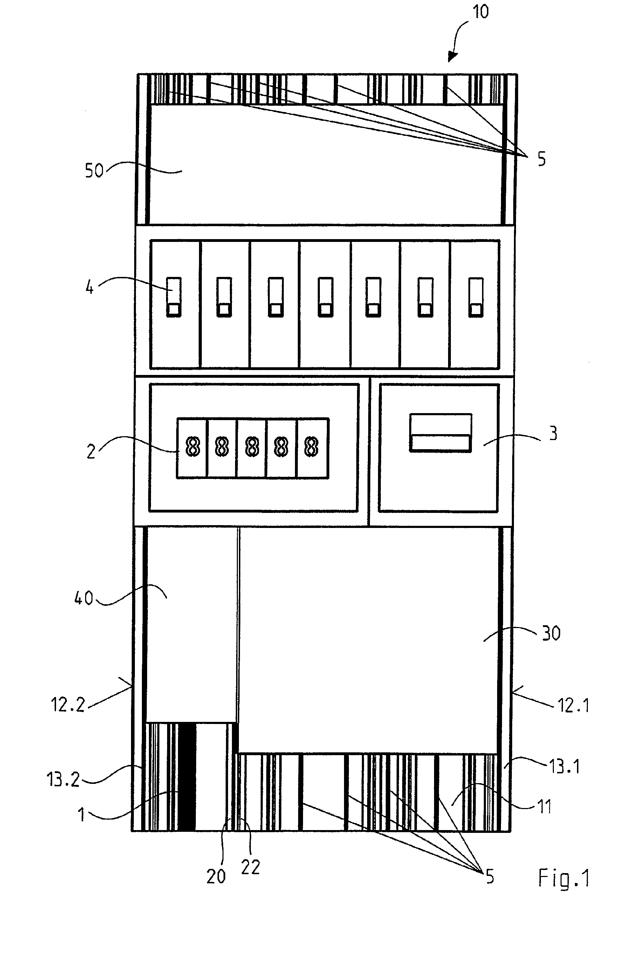

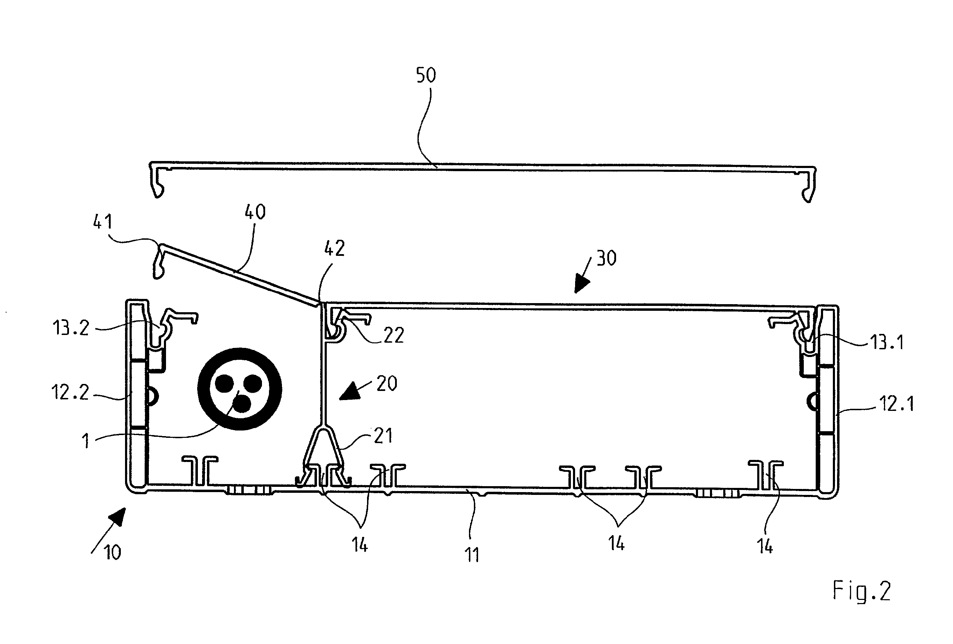

Fig. 1 als Draufsicht und Fig. 2 als Querschnitt zeigen einen an einer Wand montierten Installationskanal. Dieser umfasst ein Kanalunterteil 10, welches einen Boden 11, zwei Seitenwände 12.1, 12.2, Deckelhalteprofile 13.1, 13.2 an den Seitenwänden 12.1, 12.2 und Halteleisten 14 (Fig. 2) an der Innenseite des Bodens 11 aufweist.

Auf das Kanalunterteil 10 ist eine Anschlussbox montiert, die einen Verbrauchszähler 2, einen Hauptsicherungsautomaten 3 und eine Mehrzahl von Einzelsicherungen 4 trägt. Oberhalb, in der Praxis auch unterhalb der Anschlussbox ist das Kanalunterteil 10 mit einem Deckel 50 verschlossen, der von Seitenwand 12.1 zu Seitenwand 12.2 reicht.

Unterhalb, in der Praxis auch oberhalb der Anschlussbox ist auf eine der Halteleisten 14 (Fig. 2) eine Trennwand 20 aufgerastet, so dass das Kanalunterteil 10 in zwei Kammern unterteilt ist. Die linke Kammer nimmt ein vom Elektroversorgungsunternehmen kommendes Versorgungskabel 1 auf und ist mit einem Deckel 40 verschlossen. Die rechte, größere Kammer ist mit einem Deckel 30 verschlossen.

Schließlich erkennt man im Kanalunterteil 10 unter den Deckeln 30, 50 eine Vielzahl von elektrischen Kabeln und Leitungen 5, die von den Sicherungen 4 ausgehen.

Fig. 2 zeigt einen Querschnitt durch das Kanalunterteil 10. Auf eine der Halteleisten 14 ist die Trennwand 20 aufgerastet, die hierzu mit einem korrespondierenden Fuß 21 ausgerüstet ist. Am oberen Ende der Trennwand 20 ist ein Deckelhalteprofil 22 angeformt, welches den Deckelhalteprofilen 13.1, 13.2 an den Seitenwänden 12.1, 12.2 entspricht und den die größere Kammer lösbar verschließenden Deckel 30 aufnimmt.

Der die linke, das Versorgungskabel 1 aufnehmende Kammer verschließende Deckel 40 ist an das obere Ende der Trennwand 20 einstückig angeformt und besitzt an seinem freien Ende ein Rastprofil 41, welches mit dem Deckelhalteprofil 13.2 an der Seitenwand 12.2 korrespondiert.

Um trotz der einstückigen Konstruktion von Deckel 40 und Trennwand 20 das Öffnen und Schließen des Deckels 40 zu erleichtern, ist zwischen Trennwand 20 und Deckel 40 ein Scharnier 42 vorgesehen, entweder in Form eines Filmscharniers oder eines koextrudierten flexibleren Kunststoffmaterials.

## Patentansprüche

1. Installationskanal, im wesentlichen umfassend
- ein Kanalunterteil (10) mit
- einem Boden (11),
- zwei Seitenwänden (12.1, 12.2),
- Deckelhalteprofilen (13.1, 13.2) an den Seitenwänden (12.1, 12.2)
- und Halteleisten (14) an der Innenseite des Bodens (11),
- eine Trennwand (20) mit
- einem Fuß (21) aufrastbar auf eine der Halteleisten (14) an der Unterkante
- und einem Deckelhalteprofil (22) an der Oberkante,
- einen ersten Deckel (30), aufrastbar auf das Deckelhalteprofil (22) der Trennwand (20) und das Deckelhalteprofil (13.1) einer Seitenwand (12.1)
- und einen zweiten Deckel (40), aufrastbar auf das Deckelhalteprofil (13.2) der anderen Seitenwand (12.2),
**gekennzeichnet durch** das Merkmal:
- der zweite Deckel (40) ist mit der Trennwand (20) einstückig verbunden.

2. Installationskanal nach Anspruch 1, **gekennzeichnet durch** das Merkmal:
- der zweite Deckel (40) ist neben dem Deckelhalteprofil (22) positioniert.

3. Installationskanal nach Anspruch 1 oder 2, **gekennzeichnet durch** das Merkmal:
- Trennwand (20) und zweiter Deckel (40) sind koextrudiert.

4. Installationskanal nach einem der Ansprüche 1 bis 3, **gekennzeichnet durch** das Merkmal:
- der zweite Deckel (40) ist mittels Scharnier (42) an der Trennwand (20) angelenkt.

5. Installationskanal nach Anspruch 4, **gekennzeichnet durch** das Merkmal:
- das Scharnier (42) ist ein Filmscharnier.

6. Installationskanal nach Anspruch 4, **gekennzeichnet durch** das Merkmal:
- das Scharnier (42) ist aus einem flexiblen Material koextrudiert.

7. Installationskanal nach einem der Ansprüche 1 bis 6, **gekennzeichnet durch** das Merkmal:
- die Deckelhalteprofile (13.1, 13.2, 22) sind auf einer solchen Höhe positioniert, dass die abnehmbaren Deckel (30) mit dem fixen Deckel (40) fluchten.
